# EUROPEAN PATENT SPECIFICATION

(11) **EP 3 797 218 B1**
(45) Date of publication and mention of the grant of the patent: **30.08.2023**
(21) Application number: 19726369.2
(22) Date of filing: 21.05.2019
(51) Int. Cl.: F01K 25/06

(54) **CLOSED-CYCLE ABSORPTION SYSTEM AND METHOD FOR COOLING AND GENERATING POWER**
ABSORPTIONSANLAGE MIT GESCHLOSSENEM KREISLAUF UND VERFAHREN ZUR KÜHLUNG UND STROMERZEUGUNG
SYSTÈME D'ABSORPTION À CYCLE FERMÉ ET PROCÉDÉ DE REFROIDISSEMENT ET DE PRODUCTION D'ÉNERGIE

(30) Priority: 23.05.2018 BE 201805328
(43) Date of publication of application: 31.03.2021
(73) Proprietor: Gios, Bart, 2230 Ramsel (BE)
(72) Inventor: Gios, Bart, 2230 Ramsel (BE)
(74) Representative: Brantsandpatents bv
(86) International application number: PCT/EP2019/063138
(87) International publication number: WO 2019/224209

(56) References cited:
- WO-A1-2005/100755
- WO-A1-2010/133726
- WO-A2-2009/027302
- WO-A2-2013/088160
- DE-B3-102007 020 086
- US-A- 5 029 444

## Description

### Technical field

The present invention relates to methods for converting thermal energy into mechanical energy, and/or to cooling methods, which methods employ closed-cycle absorption systems. Moreover, the present invention further relates to closed-cycle absorption systems as such.

### Background

Closed-cycle absorption systems are known in the field of power generation and cooling.

WO 2012 128 715 A1 describes a closed-cycle absorption system for converting thermal energy into mechanical energy. Thermal energy thereby originates from a low-temperature heat source, having a maximum temperature of about 150°C. Geothermal activity, solar energy, industrial waste water, and various kinds of combustion processes are regarded as suitable sources of low-temperature heat. In a first step of the cycle, an amount of gaseous CO₂ working fluid is expanded through a turbine, such that mechanical energy can be extracted. Subsequently, the working gas is chemically absorbed by an absorption fluid, typically an amine. The gas-absorbent mixture is then pressurized. In a last step of the cycle, the mixture is separated once again into the gaseous CO₂ working fluid on one hand and the liquid amine-based absorption fluid on the other hand, through evaporation. To this end, the system is provided with an evaporator, for transferring thermal energy from the low-temperature heat source to the gas-absorbent mixture.

Typical of closed-cycle absorption systems, is that the working fluid has a higher vapor pressure than the absorption fluid. As a consequence, a gaseous phase having a higher working fluid concentration and a lower absorption fluid concentration, as compared to the pressurized liquid mixture, can be separated from said mixture, by heating the mixture up to its boiling point. The pressurized gaseous phase is subsequently expanded through the expansion machine, for instance for the sake of power generation. The evaporator thus typically has a distillation-based separating function, in addition to its evaporative function.

US 2 291 232 A discloses a similar closed-cycle absorption system, featuring an ammonia working fluid and a water absorption fluid. Again, the mixture of absorption fluid and working fluid coming out of the absorber is pressurized, and subsequently separated using an evaporator.

After its passage through the evaporator, the liquid mixture - having an increased absorption fluid concentration and a decreased working fluid concentration - is typically discharged back into the absorber. However, since this mixture has been heated up, for increasing the working fluid vapor pressure, it contains a lot of thermal energy. This thermal energy is lost to the cycle. In most cases, the absorber is provided with a heat exchanger, for draining this heat to some cold source, along with any additional heat that is produced in the absorption reaction. By reducing the temperature in the absorber, the working fluid vapor pressure is equally reduced, conveniently leading to absorption of the working fluid into the liquid mixture. A main drawback of distillation-based, evaporative separation techniques is that these require vast amounts of thermal energy. In particular, the mixture of working fluid and absorption fluid needs to be heated as a whole, for creating a gaseous phase with a high working fluid concentration. As a consequence, heat is not exploited efficiently.

Yet another drawback is that distillation-based, evaporative separation techniques do not necessarily yield a high purity gaseous working fluid. Latter purity depends, among other things, on the difference in partial vapor pressure of working fluid and absorption fluid, and on their concentration in the liquid mixture, inside the evaporator. In particular, the partial vapor pressure of the working fluid decreases with ever decreasing working fluid concentrations in the liquid mixture. The less pure said mixture is in working fluid, the higher the temperature to which said liquid mixture needs to be heated, in order to obtain similar values of the working fluid partial vapor pressure. This makes the cycle even less efficient. Another drawback resulting thereof, is that a smaller variety of heat sources is suitable; a minimum temperature, namely the boiling point of the above mixture, is required. A problem related thereto arises during the expansion process: since the absorption fluid has a significantly lower partial vapor pressure than the working fluid, the absorption fluid will condensate first. The formation of even moderate amounts of liquid absorption fluid, during the expansion process, has a highly negative impact on the expansion of the working fluid, and therefore on the overall efficiency of the system and the method. In order to prevent this condensation, a minimum temperature is again required for the heat source, such that a smaller variety of heat sources is suitable.

WO 2013 088 160 A2 (WO '160) discloses a method of absorbing heat for subsequent re-use from a thermal source comprising: passing a high pressure stream of a working fluid through or close to the thermal source so as to absorb heat from the thermal source, thereby producing a higher temperature stream comprising a liquid component and a vapour component; and separating the vapour component from the liquid component; wherein the working fluid comprises a lubricant (for example EMKARATE RL 32H), in which a natural refrigerant (eg carbon dioxide) is dissolved. The thermal source may have a temperature of no more than 150°C, and optionally 40°C or more.

WO 2010 133 726 A1 (WO '726) discloses hygroscopic cycle. The hygroscopic cycle is a power cycle that operates with steam and hygroscopic compounds. These compounds absorb steam at low pressure and temperature that has been expanded in a turbine and desorbed therefrom in a generator under the required operating conditions. In an absorber, the enthalpy of the steam is utilized and increased in the generator with the provision of heat. A turbine is able to work at high vacuums and cooling temperatures above the exit temperature of the steam in the turbine. The system comprises the following main items of equipment: absorber, dissolution pump, condensation pump, heat recovery means, thermal degasser, steam generator, steam separator, expansion valve, air cooler or cooling tower, superheater, steam turbine and, optionally, hydraulic turbine, inverse-osmosis system and absorption/adsorption machine.

WO '160 and WO '726 do not solve the drawbacks and disadvantaged mentioned above.

Consequently, there is a need in the art for closed-cycle systems and methods that separate the working fluid from the absorption fluid in a more efficient way. The present invention aims to resolve at least some of the problems mentioned above.

### Summary of the invention

In a first aspect, the present invention discloses a method according to claim 1, for converting thermal energy into mechanical energy, and/or for cooling, using a closed-cycle absorption system. In particular, the pressurized absorption mixture is separated within a separator, into a working effluent and an absorption effluent. During said separation, the absorption mixture is subjected to a pressure at or above the condensation pressure of the substantially pure working fluid, and/or to a temperature at or below the condensation temperature of the substantially pure working fluid.

The inventor found that, when reaching or traversing the condensing point of the pure working fluid, caused by increasing the separator pressure and/or by decreasing the separator temperature, the homogeneous absorption mixture becomes a heterogeneous mixture comprising an absorption phase and a working phase. In latter mixture, the absorption phase can be separated from the working phase, based on phase-specific, physical properties (e.g. based on a difference in specific weight of the phases). It is thereby straightforward to perform at least a preliminary or partial separation of the liquid absorption mixture, separating a working effluent from said mixture, without requiring to heat said mixture.

Therefore, less energy is needed than is the case for conventional, thermal separation processes such as distillation. The working effluent is enriched in the working fluid, and it is fed to the evaporator. As such, the evaporator content has a higher working fluid concentration as would have been the case if it were fed directly with the absorption mixture. In the present method, the evaporator at most has a supplementary and/or final separating function, in addition to its main, evaporative function.

Furthermore, several advantages are related to the evaporator content having a higher working fluid concentration, without the need of heating the absorption fluid content. First of all, less thermal energy is lost for generating equal amounts of gaseous working fluid. Indeed, the evaporator content now has a lower boiling point, such that it only needs to be brought to a lower temperature for it to boil. As such, the present method is applicable to a broader range of heat sources, in particular those having a lower temperature. Second, less thermal energy is lost for heating the absorption fluid in the evaporator, since the evaporator content now has a lower absorption fluid concentration. Third, any further separating function of the evaporator, if applicable, will yield a more pure gaseous phase, featuring a higher working fluid concentration. This is because the evaporator content on itself already has a higher working fluid concentration to start with.

In a second aspect, the invention discloses a closed-cycle absorption system according to claim 8, for converting thermal energy into mechanical energy, and/or for cooling.

### Description of figures

**Figure 1** gives a schematic representation of a closed-cycle absorption system according to an embodiment of the invention.
**Figure 2** gives a schematic representation of a closed-cycle absorption system according to another embodiment of the invention
**Figure 3** gives a schematic representation of a closed-cycle absorption system according to yet another embodiment of the invention.

### Detailed description of the invention

The present invention concerns a method for converting thermal energy into mechanical energy, and/or for cooling, using a closed-cycle absorption system, and a closed-cycle absorption system as such.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise.
"About" and "approximately", as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.
"Separation" and associated terms, as used herein, generally refer to the process of separating a volume and/or stream comprising one or more components from a main volume and/or stream comprising those components, and at least one further component. In doing so, the separated volume/stream is enriched in the former component(s); i.e. the former component/components are more abundant in the separated volume/stream than they are in the main volume/stream. In a possible embodiment, a separation process is employed for splitting an absorption mixture (comprising a working fluid and an absorption fluid) into a working effluent and an absorption effluent, whereby the working effluent is enriched in the working fluid and whereby the absorption effluent is enriched in the absorption fluid. A "separator", as used herein, should be understood as being an apparatus or system that is configured for performing a separation process as introduced above.
"Gravity separation" is further specified in that at least one of the driving forces is gravity. "Centrifugal separation" is further specified in that at least one of the driving forces is the centrifugal force (associated to an applicable non-inertial, rotating frame of reference). Both in gravity separation and in centrifugal separation, the separation is based on a difference in (average) specific weight of the separated volume(s)/stream(s).

The recitation of numerical ranges by endpoints includes all numbers and fractions subsumed within that range, as well as the recited endpoints. Throughout this document, fluid concentration values always relate to mass fractions and/or mass concentrations.

In a first aspect, the present invention discloses a method for converting thermal energy into mechanical energy, and/or for cooling, using a closed-cycle absorption system, said method comprising the steps of:
- transferring thermal energy from a heat source to a liquid working mixture, within an evaporator, which working mixture at least comprises a working fluid, and whereby said working fluid is at least partly evaporated from said working mixture,
- expanding said evaporated working fluid, and absorbing said expanded working fluid into a liquid absorption mixture, within an absorber, which absorption mixture at least comprises an absorption fluid,
- at least partly extracting the absorption mixture from the absorber, and pressurizing said extracted absorption mixture, and
- separating said pressurized absorption mixture, within a separator, into a working effluent and an absorption effluent, whereby said working effluent is fed to the evaporator, and whereby said absorption effluent is fed to the absorber.

In particular, during said separation, the absorption mixture is thereby subjected to a pressure at or above the condensation point of the substantially pure working fluid, and/or to a temperature at or below the condensation temperature of the substantially pure working fluid.

Preferably, for performing the method according to the first aspect, a closed-cycle absorption system is provided, for instance the closed-cycle absorption system according to the second aspect of the invention. In each case, the system preferably at least comprises an evaporator, an absorber, a pressurizing device (e.g. a pump device), and a separator. When employing the method for converting thermal energy into mechanical energy, the system preferably further comprises an expansion machine, whereby the evaporated working fluid is expanded through and/or within said expansion machine, for generating mechanical energy.

The term "absorption mixture", as used herein, refers to a mixture comprising at least the absorption fluid. In the absorber, the absorption mixture is exposed to the expanded working fluid, whereby it absorbs and dissolves the latter. Preferably, under the conditions in the absorber (e.g. temperature, pressure, and composition of the liquid and gaseous phases), the absorption mixture is capable of dissolving at least 10 volumes of the gaseous working fluid, per liquid volume of the mixture, more preferably at least 50 volumes, more preferably at least 100 volumes, and more preferably at least 200 volumes of the gaseous working fluid. Preferably, the absorption mixture comprises both the absorption fluid and the working fluid. It is preferred that the absorption mixture already present in the absorber is supplemented with the absorption effluent stemming from the separator, such that the method can be designed as a closed-cycle method. Preferably, it is continuously supplemented with said absorption effluent.

The term "working mixture", as used herein, refers to a mixture comprising at least the working fluid. Preferably, the working mixture comprises both the working fluid and the absorption fluid. However, in a non-limiting embodiment of the method, the absorption fluid concentration in the working fluid is negligibly small, for instance smaller than 1%, such that the working mixture approximates the pure working fluid (or, where applicable, the combination of pure working fluids). In any case, the working mixture preferably has a smaller absorption fluid concentration than the absorption mixture has. It is further preferred that the working mixture already present in the evaporator, is supplemented with the working effluent stemming from the separator, such that the method can be designed as a closed-cycle method. Preferably, it is continuously supplemented with said working effluent.

In a non-limiting embodiment of the invention, the working fluid is ammonia and the absorption fluid is water. For example, at atmospheric pressure, 1 ml of water at 0°C will dissolve about 1175 ml of ammonia gas, and at 20°C, 1 ml of water will dissolve about 700 ml of ammonia gas. Water and lowly-concentrated solutions of ammonia in water can thus be used as absorption mixtures, in the absorber. While ammonia reacts with water to some degree to form ammonium hydroxide, it will evaporate from water at ambient temperatures and can be expelled from solution upon heating. As such, ammonia and highly-concentrated solutions of ammonia in water can be used as working mixtures, in the evaporator. However, any absorption fluid known in the art, and any working fluid may be used in the present invention. Alternatively, more than one absorption fluid and/or more than one working fluid may be employed. Where applicable, the terms "absorption fluid" and "working fluid" may thus refer to combinations of absorption fluids and to combinations of working fluids respectively.

The system is a "closed-cycle" system, meaning that the absorption fluid and the working fluid are contained within the machinery and piping of the system, whereby there are no intentional openings to its surroundings. The use of the word "cycle" therein is to imply that the absorption and working fluids are used by the system, separated and subsequently reused or recycled. As such, once the absorption and working fluids are charged into the system, they need not be recharged under normal operation, but are used over and over again. Preferably, a pipe system is provided for leading the above-mentioned working fluid, working mixture, working effluent, absorption fluid, absorption mixture, and/or absorption effluent through the system. Preferably, one or more heat exchangers are provided for installing the optimal temperatures in the different components of the system, by exchanging heat with each other, and/or with external heat and/or cold sources.

In one embodiment, the above method is employed for converting thermal energy into mechanical energy, by means of a gaseous working fluid that expands from a high-pressure side to a low-pressure side, through an expansion machine. At the high-pressure side, the evaporator produces a stream of gaseous working fluid. To this end, heat is extracted from the heat source, for instance via a heat exchanger that is coupled to or incorporated into the evaporator. This heat is then supplied to the working mixture, causing the working fluid to at least partly evaporate from said mixture. Preferably, the evaporator produces a continuous stream of gaseous working fluid.

In an alternative or further embodiment, the present method is employed for cooling purposes. Heat is then extracted from one or more "cold" heat sources. Heat may be extracted from one or more "cold" heat sources at the evaporator side. Alternatively or in addition thereto, heat may be extracted from one or more "cold" heat sources upon and/or following to expansion of the working fluid. Said expansion may be an adiabatic expansion. Subsequently, said heat is then transferred to one or more "hot" heat sources, at the absorber side. Heat is thus pumped from said cold heat source(s) to said hot heat source(s), whereby said cold source(s) is/are further cooled. In a possible embodiment, a substantially "free" evaporation and expansion of working fluid takes place, within the evaporator. Preferably, the present method is at least suitable for converting thermal energy into mechanical energy, and/or for cooling. Throughout this document, as will be understood by the skilled person, "cooling" should be seen an equivalent to "heat pumping".

Preferably, when employing the system/method as a cooling system/method, the pressure in the evaporator is relatively low. When using ammonia as a working fluid, such "relatively low" pressures preferably are between 0,5 and 15 bar, more preferably lower than 10 bar, more preferably lower than about 7,2 bar, i.e. the boiling point of ammonia at 15°C, and more preferably lower than 5 bar, for example about 0,5 bar, about 1,0 bar, about 1,5 bar, about 2,0 bar, about 2,5 bar, about 3,0 bar, about 3,5 bar, about 4,0 bar, about 4,5 bar, about 5,0 bar, or any value therebetween. When using carbon dioxide as a working fluid, such "relatively low" pressures preferably are between 1 bar and 70 bar, preferably lower than 60 bar, preferably lower than about 50 bar, i.e. the boiling point of carbon dioxide at 15°C, and more preferably lower than 40 bar. These pressure values conveniently allow for extracting heat from some cold source, at the evaporator. Preferably, as will be recognized by the skilled person, the pressure is thereby preferably lower than the boiling point pressure at ambient temperature conditions.

Preferably, when employing the system/method as a power generating system/method, the pressure in the evaporator is relatively high. Such "relatively high" pressures preferably are between 1 and 110 bar, more preferably higher than 2 bar, more preferably lower than 40 bar, and more preferably higher than 5 bar, for example about 5 bar, 10 bar, 15 bar, 20 bar, 25 bar, 30 bar, 35 bar, 70 bar, 110 bar, or any value therebetween. The most suitable pressure value depends on the temperature of the heat source available. The expansion machine is then able to recover substantial amounts of mechanical energy from the expanding working fluid. This mechanical energy may for instance be employed in the formation of electrical energy, where the expansion machine is driving an electric energy generating mechanism such as a generator or an alternator.

A low-pressure and a high-pressure closed cycle can be thermally coupled. The absorber of the low pressure cycle can be coupled to the evaporator of the high pressure cycle to be able generating mechanical energy in the high pressure cycle, starting from a low temperature heat source coupled on the evaporator of the low pressure cycle.

The expanded gaseous working fluid subsequently passes to the absorber, at the low-pressure side of the system, where it is absorbed into the absorption mixture as described above. Preferably, the working fluid, the absorption fluid, and the conditions (e.g. temperature, pressure, composition of liquid and gaseous phases) in the absorber are such that the absorption of the gaseous working fluid into the absorption mixture is a highly spontaneous process. As such, in case the method is used for generating mechanical energy, a significant pressure reduction is created downstream of the expansion machine. Advantageously, the pressure drop across the expansion machine is increased, and a higher amount of mechanical or electrical energy can be recovered from the expansion. Suitable expansion machines are known in the art. They can comprise one or more gas turbines and/or one or more gas cylinders. Alternatively, any other suitable type of expansion machine or positive displacement machine may be used. Optionally, heat exchangers are provided for exchanging heat between the one or more expansion machines, for the sake of optimizing their working conditions.

The working fluid of the closed-cycle system is generally brought back from the low-pressure side to the high-pressure side, after having expanded and after having been absorbed. In doing so, the working fluid closes its cycle. To this end, the system preferably comprises at least one device for pressurizing fluid media, i.e. the pressurizing device. Typical of closed-cycle systems however, is that this step requires a significant amount of mechanical energy (for instance a major part of the mechanical energy that was recovered during the expansion of the working fluid through the expansion machine, where applicable). In general, the amount of mechanical energy required for pressurizing a medium, depends on the compressibility of said medium. A smaller amount of mechanical energy is required, with ever decreasing compressibility values.

In the more specific case of a closed-cycle absorption system, the working fluid is temporarily absorbed or dissolved in a liquid phase, namely in the liquid absorption mixture. Subsequently, this liquid absorption mixture (comprising working fluid) is pressurized, after which the gaseous working fluid is extracted/separated therefrom, at the high pressure side. Typically, the latter is done via distillation-based, evaporative separation techniques. An advantage of pressurizing the liquid absorption mixture, rather than directly pressurizing the gaseous working fluid, is that far less mechanical energy is needed. Indeed, the liquid absorption mixture has a far lower compressibility than the gaseous working fluid.

In the present method, the absorption mixture is, during separation, subjected to a pressure at or above the condensation pressure of the substantially pure working fluid. That is, the separator pressure is at or above the condensation pressure of the substantially pure working fluid, when taking the temperature of the latter equal to the separator temperature. Alternatively or in a similar fashion, the separator temperature is at or below the condensation temperature of the substantially pure working fluid, when taking the pressure of the latter equal to the separator pressure. Both are in fact equivalent. The "separator temperature" and the "separator pressure" should respectively be understood as being the temperature and pressure of the absorption mixture, upon separation, thus at least at the location where it is separated. "During" herein broadly refers to "at least once during". More specifically, "during" may in a non-limiting embodiment be understood as "throughout". In embodiments where two or more working fluids are combined, the above separation conditions relate to the condensation point of said working fluids combined (which are thereby seen as the "pure" working fluid).

In general, the absorption mixture may be subjected to various pressures at or above the condensation pressure of the substantially pure working fluid, or to a pressure path (for instance across a filtration membrane), at and/or above the condensation pressure of the substantially pure working fluid.

The separation conditions being at or above the condensation pressure of the pure working fluid (or, alternatively, at or below the condensation temperature of the pure working fluid) has as a consequence that the absorption mixture being separated substantially resides in one or more, condensed (liquid and/or solid) phases. It is thereby assumed that the vapor pressure of the pure working fluid is far above that of the pure absorption fluid, as is typically the case in absorption cycles. In a non-limiting embodiment, a pressurizing device such as a pump device or a hydrostatic column can be used for obtaining the above-mentioned, high-pressure separation conditions. In a hydrostatic column, the hydrostatic pressure will thus at least locally rise above the condensation pressure of the substantially pure working fluid. The homogeneous mixture will thereby only locally transform into a heterogeneous mixture of working effluent and absorption effluent.

The present method thus provides a liquid-phase separation process, for performing at least a preliminary and/or partial separation of the liquid absorption mixture. In this process, the liquid absorption mixture is separated into a liquid absorption effluent and a liquid working effluent. The liquid working effluent is enriched in the working fluid, and is supplemented to the working mixture already present in the evaporator. As a consequence, the evaporator content will have a higher working fluid concentration, as compared to closed-cycle methods/systems that solely employ distillation-based, evaporative separation techniques, and where the absorption mixture itself is fed directly to the evaporator for separation. In the present method, the evaporator at most has a supplementary and/or final separating function, in addition to its main, evaporative function.

An advantage is that less thermal energy is lost for generating equal amounts of gaseous working fluid, as compared to prior art methods/systems where the gaseous working fluid is directly extracted from the boiling absorption mixture, by means of distillation in the evaporator. First of all, the evaporator content now has a higher overall vapor pressure at equal temperatures. This is because its working fluid concentration is higher than that of the absorption mixture, where it is assumed that vapor pressure of the pure working fluid is far above that of the pure absorption fluid. Additionally, less thermal energy is lost for heating the absorption fluid in the evaporator, since the evaporator content now has a lower absorption fluid concentration. Advantageously, thermal energy that originates from the above-mentioned heat source will be employed more efficiently.

Another advantage is that any supplementary/final separating function of the evaporator, if applicable, will yield a more pure gaseous phase, featuring higher working fluid concentrations. This is because the evaporator content, and thus the working mixture, has a higher working fluid concentration to start with, and is a known property of distillation-based separation processes.

Since the evaporator content now has a higher overall vapor pressure, the present method is applicable to a broader range of heat sources, in particular those having a lower temperature. Preferably, the heat source is a low-temperature heat source, such that it provides low-temperature thermal energy. Geothermal activity, solar energy, industrial waste water, and various kinds of combustion processes are regarded as suitable sources of low-temperature heat. Given the risks associated with extensive emissions of greenhouse gases and climate change, there is clearly a need to employ such renewable and waste energy sources to a greater extent. However, any other suitable heat sources may be used.

As mentioned above in the first aspect the absorption mixture comprises a working phase and an absorption phase. The absorption mixture thereby comprises a heterogeneous mixture of two or more, condensed (i.e. liquid and/or solid) phases. At least one of those phases is a "working phase", and at least one of those phases is an "absorption phase". Preferably, the working phase is enriched in the working fluid, which means that it has a higher working fluid concentration than the absorption phase has. Preferably, the absorption phase is enriched in the absorption fluid, which means that it has a higher absorption fluid concentration than the working phase has. This allows for a separating process that is phase-specific, for performing at least a preliminary and/or partial separation of the liquid absorption mixture.

Because the working phase and absorption phase are liquid phases, there is no way the invention is limited to such cases. The inventor found that, when reaching/traversing the condensing point of the pure working fluid, caused by increasing the separator pressure and/or by decreasing the separator temperature, the homogeneous absorption mixture becomes a heterogeneous mixture comprising an absorption phase and a working phase. In latter mixture, the absorption phase can be separated from the working phase, based on phase-specific, physical properties of these phases, for instance based on a difference in specific weight / density of the phases, or for instance based on the phases interacting differently with a dedicated filtration membrane. To this end, the separator should be able to withstand a hydrostatic pressure (of the absorption mixture) of at least the condensation pressure of the pure working fluid, at the relevant separator temperature.

In possible embodiments, the specific weight of at least one of the phases is altered by means of solute; e.g. the density of water can be increased by adding salts such as sodium chlorine.

In a further or alternative embodiment, said absorption mixture is separated using centrifugal and/or gravity separation, based on a difference in specific weight of the aforementioned phases. Most of the working phase is thereby combined into the working effluent, and/or most of the absorption phase is thereby combined into the absorption effluent. A significant difference in specific weight between the working phase and the absorption phase, allows for separating the absorption mixture using a simple gravity separator (e.g. a decanter). Alternatively, a centrifugal force driven separator may be employed. However, in no way the invention is limited to decanters or centrifugal force driven separators; the skilled person is able to select a separating mechanism according to the specific needs, especially with regard to the type of working and absorption fluid employed. Preferably, latter separation mechanism is based on a difference in specific weight of one phase as compared to the other(s). Most of the working phase is thereby combined into the working effluent, and/or most of the absorption phase is thereby combined into the absorption effluent.

In a further or alternative embodiment, said absorption mixture is separated using filtration. As to obtain a proper separation, the intermolecular forces between water and ammonia need to be overcome. Latter forces can be overcome using a semi-permeable membrane, for instance using a reverse osmosis membrane. A sufficiently high separating pressure, applied across the membrane will then overcome the intermolecular forces that exist between water and ammonia. Preferably, the membrane should act as a semi-permeable membrane that obstructs the passage of ammonia (= retentate), while water is still able to pass through (= permeate). Therefore, ammonia should be present as molecules of ammonia "NH₃", rather than ammonium ions "NH₄⁺". Latter situation is obtained by increasing the overall pressure acting on the absorption mixture, to values above the condensation pressure of pure ammonia. Preferably, also the pressure acting on the absorption effluent (on the other side of the membrane) is above the condensation pressure of pure ammonia.

In general, said filtration means can comprise flat membranes, membrane tubes, hollow fibers, and/or ceramic filters. Preferably, said filtration means comprise reverse osmosis (RO) and/or nanofiltration (NF) membranes. However, throughout this document, the term "filtration membrane" can readily be replaced by any other suitable means for performing reverse osmosis and/or nanofiltration.

As a result of the above, the present method provides a *liquid-phase* membrane separation process, for performing at least a preliminary and/or partial separation of the liquid absorption mixture. In this process, the liquid absorption mixture is separated into a *liquid* absorption effluent and a *liquid* working effluent, via a filtration separator. The liquid working effluent is enriched in the working fluid, and is supplemented to the working mixture already present in the evaporator. As a consequence, the evaporator content will have a higher working fluid concentration, as compared to closed-cycle methods/systems that solely employ distillation-based, evaporative separation techniques, and where the absorption mixture itself is fed directly to the evaporator for separation. In the present method, the evaporator at most has a supplementary and/or final separating function, in addition to its main, evaporative function.

According to a further or alternative embodiment of the method, the working mixture has a working fluid concentration of more than about 40%. The higher the working fluid concentration in the working mixture, the more pronounced the above-mentioned advantages will be. Preferably, said working fluid concentration is above about 50%, more preferably above about 60%, more preferably above about 70%, more preferably above about 80%, more preferably above about 90%, more preferably above about 95%, and more preferably above about 99%. For such high working fluid concentrations in the working mixture, the working mixture nearly behaves as a pure working fluid. The evaporator then mainly has an evaporative function, namely the function of turning said liquid-phase, nearly pure working fluid into a gaseous-phase, nearly pure working fluid, at the high-pressure side. The supplementary/final separating function of the evaporator is then rather limited.

In embodiments where the separator pressure is higher than the pressure required by the working conditions for the evaporator, a pressure reduction valve can be employed. In embodiments where the ideal separator pressure is lower than the pressure at the most ideal working conditions for the evaporator, an additional pressurizing device (e.g. e pumping device) may be employed.

According to a further or alternative embodiment, the absorption fluid comprises water, whereby said working fluid comprises ammonia. Other working fluids and other absorption fluids having a high ability of absorbing said working fluids may alternatively be used. However, ammonia and water are preferred as they are both relatively inexpensive, and most importantly, ammonia and water have a great affinity for each other, as has been illustrated above. While ammonia reacts with water to some degree to form ammonium hydroxide, it will evaporate from water at ambient temperatures and can be expelled from solution upon heating, whereas other working fluids which are also readily soluble in water are either difficult to separate from water, or are themselves more corrosive, either as gaseous working fluid or as a solution in water, than is ammonia. Other suitable absorption fluids comprise alcohols, such as ethanol and acids such as acetic, and mixtures thereof with themselves and water. In general, working and absorption fluids are selected which allow at least about 200 volumes of gaseous working fluid to dissolve in one volume of the liquid absorption mixture (containing the working fluid and the absorption fluid), under the conditions that prevail in the absorber.

In a further or alternative embodiment - in which water is employed as absorption fluid, and in which ammonia is employed as a working fluid - the absorption mixture is separated at a temperature of between 60°C and 200°C, more preferably of at least 70°C, more preferably at least 80°C, more preferably at least 90°C, more preferably at least 100°C, more preferably at least 110°C, more preferably at least 120°C, more preferably at least 130°C, and most preferably of between 120°C and 160°C, for instance between 130°C and 150°C. The inventor observed that the viscosity of liquid-phase water-ammonia mixtures and solutions is significantly lower at such raised temperatures, and far less dependent on the ammonia mass fraction, in the absorption mixture. More specifically, the ammonia-water intermolecular interactions lower in strength, when heating the absorption mixture to such temperatures. Most preferably, the temperature within the separator amounts to 130°C-150°C, while the pressure within the separator is above 115 bar (thus above the condensation pressure - critical pressure of ammonia). Under such circumstances, the separation of the absorption mixture into a working effluent and an absorption takes place in a more spontaneous fashion, as compared to lower temperature regimes. In particular, above the critical point of ammonia (being 132,4°C; 114,8 bar), there no longer exists a significant affinity between water and ammonia. In such conditions, separation of the absorption mixture occurs spontaneously.

According to a further or alternative embodiment, the absorption fluid comprises water, whereby the working fluid comprises carbon dioxide. According to a further or alternative embodiment, the absorption fluid is substantially water.

According to a further or alternative embodiment, the above-mentioned working mixture is partly transferred from the evaporator to the absorber, and/or to the separator. More preferably, a small amount of the liquid-phase evaporator content is continuously pumped back from the evaporator to the influent section of the separator. This will prevent the absorption fluid from accumulating in the evaporator. Indeed, since the absorption fluid has a higher boiling point than the working fluid, it will predominantly remain in the liquid phase. Therefore, small amounts of absorption fluids can build up to dominant concentrations.

According to a further or alternative embodiment of the method, a heat exchanger is provided, for further heating said evaporated working fluid. This can be done using heat that originates from the above or from further heat sources, and via the above or via further heat exchangers. An advantage is that the heated working fluid can set free a higher amount of mechanical energy upon expansion through said expansion machine.

In a second aspect, the invention discloses a closed-cycle absorption system for converting thermal energy into mechanical energy, and/or for cooling, said system comprising an evaporator, an absorber, a separator, and a pressurizing device, which pressurizing device is operatively connected to both the absorber and the separator. In particular, said pressurizing device is configured for pressurizing an absorption mixture, comprising a working fluid and an absorption fluid, from the absorber into the separator, and up to an average pressure at or above the condensation point of the substantially pure working fluid.

According to a further or alternative embodiment of the system, said system is configured for performing the method as described above. All the above-mentioned advantages can in this regard be repeated. When configured for generating mechanical energy, the system preferably further comprises an expansion machine, for generating mechanical energy through expansion of the evaporated/evaporating working fluid.

According to a further or alternative embodiment, said separator is a gravity and/or centrifugal separator, with the above-mentioned advantages. Alternatively said separator is a filtration-based separator comprising a filtration means, with the above-mentioned advantages.

According to a further or alternative embodiment, said system comprises a heat exchanger, for further heating the evaporated working fluid. According to a further or alternative embodiment, said heat exchanger is incorporated into an expansion machine of the system. Preferably, this heat exchanger supplies heat to the expansion machine, which heat originates form external heat sources and/or from other components of the system. An advantage is that, during a heated, isothermal expansion of the working fluid, the expansion machine is able to deliver more mechanical energy, as compared to an adiabatic expansion.

According to a further or alternative embodiment, the evaporator is incorporated into an expansion machine of the system. In case the concentration of the absorption fluid in the working mixture is sufficiently low, the evaporator only has a limited supplementary/final separating function, or even none at all. Preferably, the expansion machine is thus provided with an evaporator comprising one or more heat exchangers, which heat exchangers provide a sufficiently high amount of heat for converting the liquid working fluid into gaseous working fluid, inside the expansion machine - thus upon expanding. Simultaneously and/or immediately thereafter, said expansion-energy is converted into useful mechanical energy, and it is extracted from the system.

The absorption of ammonia in water is an exothermic process that occurs in a very reactive way. Therefore, the absorption process will cause the absorption mixture temperature to rise. This temperature should stay below the boiling point of the absorption mixture; if not, the absorption process will no longer take place. For a lower working fluid concentration within the absorption mixture, the boiling point of latter mixture will preferably be higher.

The absorber may be designed as a heat exchanger, where in a first flow compartment the liquid-phase absorption mixture and the gas-phase working fluid can interact with each other, and where in a second, counterflow compartment, a cooling fluid flows in thermal interaction with the first compartment. This way, the absorption mixture at the outlet point is maximally cooled by the cooling fluid and so the absorption mixture at the outlet can contain an amount of working fluid as high as possible. The absorption-efficiency of the absorber is thereby maximized. Furthermore, the cooling fluid leaving the absorber is heated up to almost the boiling point of the absorption fluid that is entering the absorber. The more pure the absorption fluid that enters the absorber, the higher its boiling point and the higher the temperature of the cooling fluid that comes out the absorber.

At a pressure of 1 bar, the boiling point of a practically 100% H₂O absorption mixture is about 100°C. The boiling point of a 10% NH₃ aqueous solution is about 68°C. The boiling point of a 20% NH₃ aqueous solution is about 47°C. The boiling point of a 30% NH₃ aqueous solution is about 27°C. The boiling point of a 40% NH₃ aqueous solution is about 10°C. The boiling point of a 50% NH₃ aqueous solution is about-5°C. Specially in case only ambient temperature heat sources are available, the overall mechanical power output of the system can be increased by employing the abovementioned heat that is generated during the absorption process for heating the expansion machine - a so-called heated engine. To this end, a suitable heat exchanger can be incorporated into the expansion machine.

The higher the temperature of the working fluid that comes out the heated engine, the higher the amount of mechanical energy the working fluid generate during the expansion process in the engine.

Because the working fluid intends to cool down during the expansion process in the engine, the overall mechanical power output of the engine can be increased by use of a rotary type heated positive displacement engine where the working fluid and the heating fluid flows countercurrent during the heated expansion process in the engine. The working fluid thereby reaches a maximum temperature by the end of the expansion process.

In a possible configuration, the absorber, evaporator, and (heated) expansion machine are thermally coupled. Optionally, they are coupled directly, allowing for direct thermal conduction, without further heat exchanging fluid and conventional heat exchangers. The use of an intermediate heat exchanging fluid creates a temperature drop between the hot and cold side of the heat exchanging process. This temperature drop can be eliminated by direct thermally coupling the hot and cold side of the heat exchanging process.

According to a further or alternative embodiment, the separator is a filtration-based separator having an inlet for the absorption mixture, and having respective outlets for the working and absorption effluents.

According to a further or alternative embodiment, the separator inlet is provided with a heat exchanger for heating the absorption mixture to adequate separation temperatures, prior to separation. Optionally, one or both of the separator outlets are provided with heat exchanges for at least partly recuperating said heat from the liquid absorption effluent and/or from the liquid working effluent, after separation.

According to a further or alternative embodiment, the system is configured for performing the method according to the first aspect of the invention. As such, method-features can be included in the system, whereby the corresponding advantages are repeated.

The invention is now further described by the following non-limiting examples and figures. These further examples and figures are meant to illustrate the invention, and are not intended to, nor should they be interpreted to, limit its scope.

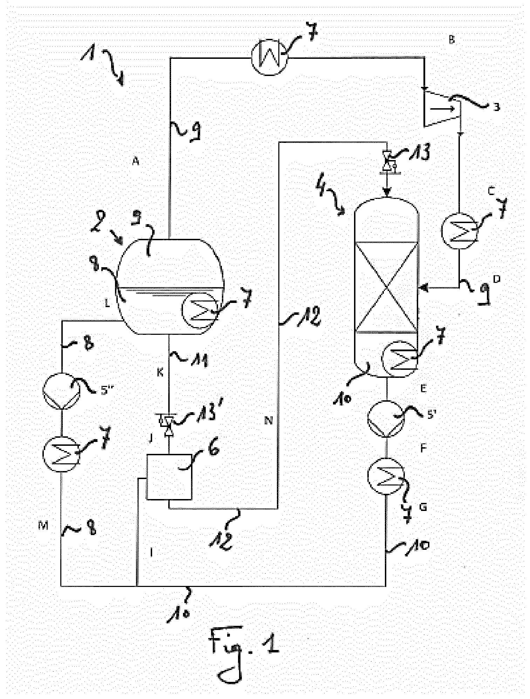

**Figure 1** gives a schematic representation of a closed-cycle absorption system **1** according to an embodiment of the invention. The system **1** comprises an evaporator **2,** an expansion machine **3,** an absorber **4,** two pressurizing devices **5,** and a separator **6.** Multiple heat exchangers **7** are provided, for installing the optimal temperatures in the individual components of the system **1.** They do so by interchanging heat, and/or by exchanging heat with one or more, external heat and/or cold sources.

When the system **1** is in operation, the evaporator **2** contains a boiling working mixture **8,** in equilibrium with its gaseous phase. The working mixture **8** comprises both the working fluid **9** and the absorption fluid, while its gaseous phase predominantly comprises the gaseous working fluid **9.** A heat exchanger **7** is provided, for continuously supplying the evaporator **2** with heat. The latter heat originates from some low-temperature heat source. The gaseous working fluid **9** is extracted from the evaporator **2** via a pipe, and is further heated using a second heat exchanger **7.** For instance, the required heat is thereby extracted from the same, low-temperature heat source. Subsequently, the working fluid **9** is expanded through the expansion machine **3,** from the high-pressure side to the low-pressure side. The absorber **4** is provided at the low-pressure side, for subsequently dissolving the gaseous, expanded working fluid **9** into an absorption mixture **10.** In case of water and ammonia, this process is highly spontaneous, such that the pressure is further lowered at the absorber **4.** Additionally, this process is exothermal. Any surplus heat is drained via a further heat exchanger **7** that is incorporated in the absorber **4.** For instance, a part of this heat can be transferred to the expanded working fluid **9,** since the latter has experienced a significant temperature drop during its expansion.

An absorption mixture **10** stream is continuously extracted from the absorber **4.** To this end, a pressurizing device **5'** is provided. The latter pressurizes the absorption mixture **10** back into the high-pressure side of the system **1.** The separator 6 subsequently separates the pressurized absorption mixture **10** into a working effluent **11** and an absorption effluent **12.** During said separation, the absorption mixture **10** (optionally supplemented with a small amount of working mixture **8,** stemming from the evaporator **2** at a low rate) is subjected to a pressure at or above the condensation pressure of the substantially pure working fluid **9.** This allows for a straightforward separation, based on physical differences between the working phase and absorption phase, as described above.

The working effluent **11** is enriched in the working fluid **9,** and it is supplied to the evaporator **2.** The absorption effluent **12,** on the other hand, is enriched in the absorption fluid, and is supplied to the absorber **4.** Any pressure drop thereby arising may be overcome, through the provision of an expansion valve **13.** However, such an expansion valve **13** is optional; it may, or it may not be present.

The table below relates to a specific, further embodiment of figure 1. The table summarizes the temperatures, pressures, densities, and concentrations in the respective in key parts A-M of the closed-cycle absorption system **1.** Additionally, the inputs and outputs of power P and heat Q to the system **1** are shown.

In particular, the working fluid **9** is Ammonia (R717), and the absorption fluid is water (R718). The absorption mixture **10** has a working fluid **9** flow of about 1 kg/s, and an absorption fluid flow of about 2,33 kg/s. The separator **6** is a gravity separator, designed as a stationary decanter. The expansion machine **3** is a gas turbine. The theoretical net mechanical power produced is 49 kW. The cycle provides a constant temperature (-25°C) cold source with a thermal power of 1345 kW.

| | T [°C] | P [Bar] | v [m³/kg] | NH3 [%] | H2O [%] | Q [kW] | P [kW] |
|---|---|---|---|---|---|---|---|
| A | -25,21 | 1,5 | 0,78 | 99,99 | 0,01 | | |
| HEAT EXCHANGER 7 | | | | | | 91,64 | |
| B | 15,00 | 1,5 | 0,92 | 99,99 | 0,01 | | |
| EXPANSION MACHINE 3 | | | | | | | -53,32 |
| C | -11,05 | 1,0 | 1,25 | 99,99 | 0,01 | | |
| HEAT EXCHANGER 7 | | | | | | 57,06 | |
| D | 15,00 | 1,0 | 1,39 | 99,99 | 0,01 | | |
| HEAT EXCHANGER 7 | | | | | | -1475,97 | |
| E | 25 | 1,0 | 0,0011 | 30 | 70 | | |
| PRESSURIZING DEVICE 5' | | | | | | | 4,03 |
| F | 25 | 12,0 | 0,0011 | 30 | 70 | | |
| G | 25 | 12,0 | 0,0011 | 30 | 70 | | |
| HEAT EXCHANGER 7 | | | | | | 0 | |
| I | 25 | 12,0 | 0,0011 | 30 | 70 | | |
| J | 25 | 12,0 | 0,00166 | 99,9 | 0,1 | | |
| K | 25 | 1,5 | 0,00166 | 99,9 | 0,1 | | |
| HEAT EXCHANGER 7 | | | | | | 1345,24 | |
| L | -25,21 | 1,5 | 0,00162 | 98,0 | 2,0 | | |
| PRESSURIZING DEVICE 5" | | | | | | | 0,1 |
| HEAT EXCHANGER 7 | | | | | | 31,32 | |
| M | 15 | 12 | 0,00162 | 98,0 | 2,0 | | |

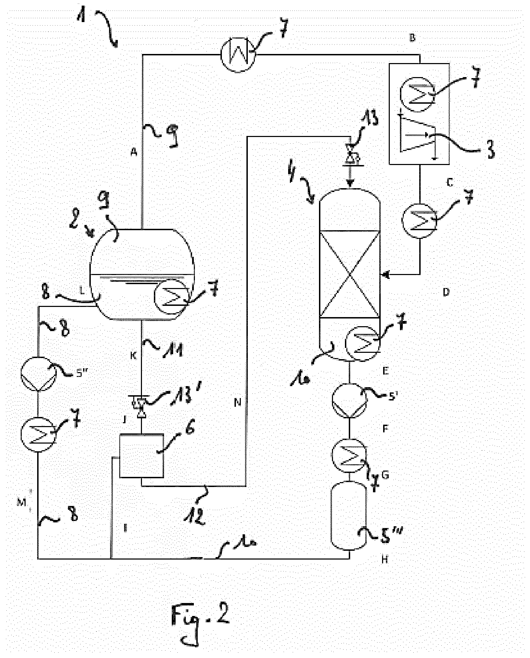

**Figure 2** gives a schematic representation of a closed-cycle absorption system **1** according to another embodiment of the invention. In contrast to the embodiment of figure 1, a heat exchanger **7** has now been incorporated into the expansion machine **3.** This heat exchanger **7** supplies heat to the expanding working fluid **9.** Advantageously, during a heated, substantially isothermal expansion of the working fluid **9,** the expansion machine **3** is able to deliver a higher amount of mechanical energy, as compared to an adiabatic expansion. A hydrostatic column (height ca. 100 m) is provided as further pressurizing device 5**′′′**.

The table below relates to a specific, further embodiment of figure 2. The table summarizes the temperatures, pressures, densities, and concentrations in the respective in key parts A-M of the closed-cycle absorption system **1.** Additionally, the inputs and outputs of power P and heat Q to the system **1** are shown.

In particular, the working fluid is Ammonia (R717), and the absorption fluid is water (R718). The absorption mixture **10** has a working fluid **9** flow of about 1 kg/s, and an absorption fluid flow of about 2,33 kg/s. The theoretical net mechanical power produced is 268 kW.

| | T [°C] | P [Bar] | v [m³/kg] | NH3 [%] | H2O [%] | Q [kW] | P [kW] |
|---|---|---|---|---|---|---|---|
| A | 15,00 | 7,28 | 0,1746 | 99,99 | 0,01 | | |
| HEAT EXCHANGER 7 | | | | | | 0 | |
| B | 15,00 | 7,28 | 0,1746 | 99,99 | 0,01 | | |
| HEATED EXPANSION MACHINE 7-3 | | | | | | 317,80 | -268,88 |
| C | 15,00 | 1,0 | 1,3895 | 99,99 | 0,01 | | |
| HEAT EXCHANGER 7 | | | | | | 0 | |
| D | 15,00 | 1,0 | 1,3895 | 99,99 | 0,01 | | |
| HEAT EXCHANGER 7 | | | | | | -1475,97 | |
| E | 25 | 1,0 | 0,0011 | 30 | 70 | | |
| PRESSURIZING DEVICE 5' | | | | | | | 0,77 |
| F | 25 | 3,08 | 0,0011 | 30 | 70 | | |
| G | 25 | 12,0 | 0,0011 | 30 | 70 | | |
| HEAT EXCHANGER 7 | | | | | | 0 | |
| I | 25 | 12,0 | 0,0011 | 30 | 70 | | |
| J | 25 | 12,0 | 0,00166 | 99,9 | 0,1 | | |
| K | 25 | 7,28 | 0,00166 | 99,9 | 0,1 | | |
| HEAT EXCHANGER 7 | | | | | | 1426,18 | |
| L | 15 | 7,28 | 0,1746 | 98,0 | 2,0 | | |
| PRESSURIZING DEVICE 5" | | | | | | | 0,1 |
| HEAT EXCHANGER 7 | | | | | | 0 | |
| M | 15 | 12 | 0,00162 | 98,0 | 2,0 | | |

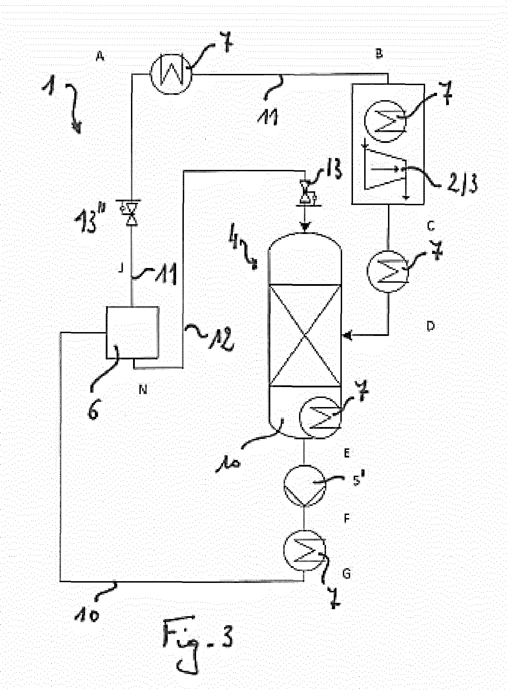

**Figure 3** gives a schematic representation of a closed-cycle absorption system **1** according to yet another embodiment of the invention. In contrast to the embodiment of figure 2, the evaporator **2** has now been incorporated into the expansion machine **3.** This is possible in case the working effluent **11** has a sufficiently low absorption fluid concentration. As such, the evaporator **2** no longer has an important separating function, and the working effluent **11** can be fed directly to a heated expansion machine **3;** the evaporator **2** itself has thereby been incorporated into the expansion machine **3.** As such, the expansion-energy of the working effluent, when passing from liquid to gaseous phase, can be converted into useful mechanical energy.

The table below relates to a specific, further embodiment of figure 3. The table summarizes the temperatures, pressures, densities, and concentrations in the respective in key parts A-G, J, and N of the closed-cycle absorption system **1.** Additionally, the inputs and outputs of power P and heat Q to the system **1** are shown.

In particular, the working fluid is Ammonia (R717), and the absorption fluid is water (R718). The absorption mixture **10** has a working fluid **9** flow of about 1 kg/s, and an absorption fluid flow of about 2,33 kg/s. The separator is a gravitation separator, for instance a decanter. The expansion machine **3** is an isothermal expansion machine **3,** for instance a heated positive displacement machine. The theoretical net mechanical power produced is 394 kW.

| | T [°C] | P [Bar] | v [m³/kg] | NH3 [%] | H2O [%] | Q [kW] | P [kW] |
|---|---|---|---|---|---|---|---|
| A | 25 | 7,28 | 0,00166 | 99,9 | 0,1 | | |
| HEAT EXCHANGER 7 | | | | | | 0 | |
| B | 25 | 7,28 | 0,00166 | 99,9 | 0,1 | | |
| HEATED EXPANSION MACHINE 7-3 | | | | | | 1866,76 | -394,82 |
| C | 15,00 | 1,0 | 1,3895 | 99,99 | 0,01 | | |
| HEAT EXCHANGER 7 | | | | | | 0 | |
| D | 15,00 | 1,0 | 1,3895 | 99,99 | 0,01 | | |
| HEAT EXCHANGER 7 | | | | | | -1475,97 | |
| E | 25 | 1,0 | 0,0011 | 30 | 70 | | |
| PRESSURIZING DEVICE 5' | | | | | | | 4,03 |
| F | 25 | 12,0 | 0,0011 | 30 | 70 | | |
| G | 25 | 12,0 | 0,0011 | 30 | 70 | | |
| HEAT EXCHANGER 7 | | | | | | 0 | |
| I | 25 | 12,0 | 0,0011 | 30 | 70 | | |
| J | 25 | 12,0 | 0,00166 | 99,9 | 0,1 | | |

### Example 1

In a possible embodiment, the absorption fluid comprises water, whereby the working fluid comprises carbon dioxide. Assuming that the separator temperature is equal to about 20°C, the absorption mixture will, at pressures of about 57 bar or higher, split into a liquid absorption phase (of water saturated with carbon dioxide) and a liquid working phase (of mostly carbon dioxide). The density of the liquid carbon dioxide thereby amounts to about 775 kg/m³. The density of the water phase can be changed by adding a solute to the absorption fluid. For instance, water including sodium chlorine could be used as absorption fluid, as to make sure that the absorption phase has a substantially larger specific weight than the working phase has. By means of a gravity separation and/or centrifugal force separation process, the working phase is then mostly collected into a working effluent, while the absorption phase is mostly collected into an absorption effluent, based on their difference in specific gravity.

### Example 2

In a possible embodiment, the absorption fluid comprises water, whereby the working fluid comprises ammonia. Assuming that the separator pressure is equal to about 1 bar, the working mixture in the separator may be cooled down to below a solidification temperature for the water - about -100°C to 0°C, depending on the ammonia content. For working mixtures having an ammonia content of about 30% or lower, a solid and substantially pure absorption phase will thereby be formed. This absorption phase can easily be separated, for instance via filtration. The ammonia concentration in the remaining, liquid phase is thereby increased. As such, at least a preliminary or partial separation of the liquid absorption mixture is performed. However, a lot of latent heat is consumed in the solidification and melting processes, such that the efficiency of the cycle may be relatively low.

### Example 3

In a possible embodiment, the absorption fluid comprises water, while the working fluid comprises ammonia. The water-ammonia absorption mixture stemming from the absorber is heated and pressurized. Subsequently it is fed to a separator. The temperature in the separator amounts to about 130°C. Quite advantageously, solutions and mixtures of ammonia and water have very low viscosity values at such raised temperatures. A viscosity of less than 250 µPa.s was observed. At the same time, the pressure in the separator amounts to about 115 bar, thus at/above the condensing point of the pure working fluid (= ammonia). In the latter, the above-mentioned separator temperature was taken into account. The inventor found that, under such conditions, the homogeneous absorption mixture becomes a heterogenous mixture comprising an absorption phase and a working phase. Both are liquid phases.

### Example 4

In a possible embodiment, the absorption phase can be separated from the working phase, based on phase-specific, physical properties of a filtration membrane. More specifically, water will tend to travel through the membrane. The resulting permeate provides an absorption effluent. The absorption effluent resides at a somewhat lower pressure (considering the pressure drop across the membrane), but still above the relevant condensation pressure of pure ammonia. The retentate has an increased ammonia content. It can be employed as a working effluent.

The elements on the figures are:
1. Closed-cycle absorption system
2. Evaporator
3. Expansion machine
4. Absorber
5. Pressurizing device
6. Separator
7. Heat exchanger
8. Working mixture
9. Working fluid
10. Absorption mixture
11. Working effluent
12. Absorption effluent
13. Expansion valve

It is supposed that the present invention is not restricted to any form of realization described previously and that some modifications can be added to the presented examples and figures, without reappraisal of the appended claims.

## Claims

1. A method for converting thermal energy into mechanical energy, and/or for cooling, using a closed-cycle absorption system **1,** said method comprising the steps of:
- transferring thermal energy from a heat source to a liquid working mixture **8,** within an evaporator **2,** which working mixture **8** at least comprises a working fluid **9,** and whereby said working fluid **9** is at least partly evaporated from said working mixture **8,**
- expanding said evaporated working fluid **9,** and absorbing said expanded working fluid **9** into a liquid absorption mixture **10,** within an absorber **4,** which absorption mixture **10** at least comprises an absorption fluid,
- at least partly extracting the absorption mixture **10** from the absorber **4,** and pressurizing said extracted absorption mixture **10,** and
- separating said pressurized absorption mixture **10,** within a separator **6,** into a working effluent **11** and an absorption effluent **12,** whereby said working effluent **11** is fed to the evaporator **2,** and whereby said absorption effluent **12** is fed to the absorber **4,**
**characterised in that**, during said separation, the absorption mixture **10** is subjected to a pressure at or above the condensation pressure of the pure working fluid **9,** whereby during said separation, the absorption mixture **10** comprises a working phase and an absorption phase, whereby said working phase and absorption phase are liquid phases.

2. The method according to previous claim 1, whereby said absorption mixture **10** is separated using centrifugal and/or gravity separation, or using filtration.

3. The method according to any of the previous claims, whereby said absorption fluid comprises water, whereby said working fluid **9** comprises carbon dioxide.

4. The method according to any of the previous claims, whereby said absorption fluid comprises water, whereby said working fluid **9** comprises ammonia.

5. The method according to any of the previous claims, whereby said absorption fluid is substantially water.

6. The method according to any of the previous claims, whereby the working mixture **8** is partly transferred from the evaporator **2** to the absorber **4,** and/or to the separator **6.**

7. The method according to any of the previous claims, whereby said evaporated working fluid **9** is further heated.

8. A closed-cycle absorption system **1** for converting thermal energy into mechanical energy, and/or for cooling, said system **1**, configured to perform the method according to claim 1 and comprising an evaporator **2,** an absorber **4,** a separator **6,** and a pressurizing device **5,** which pressurizing device **5** is operatively connected to both the absorber **4** and the separator **6**, whereby said pressurizing device **5** is configured for pressurizing an absorption mixture **10** comprising a working fluid **9** and an absorption fluid, from the absorber **4** into the separator **6,** and up to a pressure at or above the condensation pressure of the pure working fluid **9**.

9. The system **1** according to previous claim 8, whereby said separator **6** is a gravity and/or centrifugal separator.

10. The system **1** according to any of claims 8 and 9, whereby said system **1** comprises a heat exchanger **7,** for further heating the evaporated working fluid **9.**

11. The system **1** according to previous claim 10, whereby said heat exchanger **7** is incorporated into an expansion machine **3** of the system **1.**

12. The system **1** according to any of claims 8-11, whereby said evaporator **2** is incorporated into an expansion machine **3** of the system **1.**

## Patentansprüche

1. Verfahren zum Umwandeln von thermischer Energie in mechanische Energie und/oder zum Kühlen mit Hilfe eines Absorptionssystems mit geschlossenem Kreislauf **1,** wobei das Verfahren die folgenden Schritte umfasst:
- Übertragen thermischer Energie von einer Wärmequelle auf eine flüssige Arbeitsmischung **8** in einem Verdampfer **2,** wobei die Arbeitsmischung **8** mindestens ein Arbeitsfluid **9** umfasst und wobei das Arbeitsfluid **9** zumindest teilweise aus der Arbeitsmischung **8** verdampft wird,
- Expandieren des verdampften Arbeitsfluids **9** und Absorbieren des expandierten Arbeitsfluids **9** in eine flüssige Absorptionsmischung **10** in einem Absorber **4,** wobei die Absorptionsmischung **10** zumindest teilweise ein Absorptionsfluid umfasst,
- zumindest teilweises Extrahieren der Absorptionsmischung **10** aus dem Absorber **4** und Beaufschlagen der extrahierten Absorptionsmischung **10** mit Druck und
- Separieren der mit Druck beaufschlagten Absorptionsmischung **10** in einem Separator **6** in einen Arbeitsausfluss **11** und einen Absorptionsausfluss **12,** wobei der Arbeitsausfluss **11** zu dem Verdampfer **2** geführt wird und wobei der Absorptionsausfluss **12** zu dem Absorber **4** geführt wird,
**dadurch gekennzeichnet, dass** die Absorptionsmischung **10** während des Separierens einem Druck gleich oder über dem Kondensationsdruck des reinen Arbeitsfluids **9** ausgesetzt wird, wobei die Absorptionsmischung **10** während des Separierens eine Arbeitsphase und eine Absorptionsphase umfasst, wobei die Arbeitsphase und die Absorptionsphase flüssige Phasen sind.

2. Verfahren nach dem vorhergehenden Anspruch 1, wobei die Absorptionsmischung **10** mit Hilfe von Zentrifugal- und/oder Schwerkraftseparierung oder mit Hilfe von Filterung separiert wird.

3. Verfahren nach einem der vorhergehenden Ansprüche, wobei das Absorptionsfluid Wasser umfasst, wobei das Arbeitsfluid **9** Kohlenstoffdioxid umfasst.

4. Verfahren nach einem der vorhergehenden Ansprüche, wobei das Absorptionsfluid Wasser umfasst, wobei das Arbeitsfluid **9** Ammoniak umfasst.

5. Verfahren nach einem der vorhergehenden Ansprüche, wobei das Absorptionsfluid im Wesentlichen Wasser ist.

6. Verfahren nach einem der vorhergehenden Ansprüche, wobei die Arbeitsmischung **8** teilweise von dem Verdampfer **2** zu dem Absorber **4** und/oder dem Separator **6** übertragen wird.

7. Verfahren nach einem der vorhergehenden Ansprüche, wobei das verdampfte Arbeitsfluid **9** weiter erwärmt wird.

8. Absorptionssystem mit geschlossenem Kreislauf **1** zum Umwandeln von thermischer Energie in mechanische Energie und/oder zum Kühlen, wobei das System **1** dafür gestaltet ist, das Verfahren nach Anspruch 1 auszuführen, und einen Verdampfer **2,** einen Absorber **4,** einen Separator **6** und eine Druckbeaufschlagungsvorrichtung **5** umfasst, wobei die Druckbeaufschlagungsvorrichtung **5** funktionsfähig mit sowohl dem Absorber **4** als auch dem Separator **6** verbunden ist, wobei die Druckbeaufschlagungsvorrichtung **5** dafür gestaltet ist, eine Absorptionsmischung **10,** die ein Arbeitsfluid **9** und ein Absorptionsfluid umfasst, von dem Absorber **4** in den Separator **6** und bis zu einem Druck bei oder über dem Kondensationsdruck des reinen Arbeitsfluids **9** mit Druck zu beaufschlagen.

9. System **1** nach dem vorhergehenden Anspruch 8, wobei der Separator **6** ein Schwerkraft- und/oder ein Zentrifugalseparator ist.

10. System **1** nach einem der Ansprüche 8 und 9, wobei das System **1** einen Wärmetauscher **7** zum weiteren Erwärmen des verdampften Arbeitsfluids **9** umfasst.

11. System **1** nach dem vorhergehenden Anspruch 10, wobei der Wärmetauscher **7** in eine Expansionsmaschine **3** des Systems **1** integriert ist.

12. System **1** nach einem der Ansprüche 8 bis 11, wobei der Verdampfer **2** in eine Expansionsmaschine **3** des Systems **1** integriert ist.

## Revendications

1. Procédé de conversion d'énergie thermique en énergie mécanique, et/ou de refroidissement, utilisant un système d'absorption à cycle fermé **1,** ledit procédé comprenant les étapes consistant à :
- transférer l'énergie thermique d'une source de chaleur à un mélange de travail liquide **8,** à l'intérieur d'un évaporateur **2,** lequel mélange de travail **8** comprend au moins un fluide de travail **9,** et dans lequel ledit fluide de travail **9** est au moins partiellement évaporé dudit mélange de travail **8,**
- détendre ledit fluide de travail évaporé **9,** et absorber ledit fluide de travail détendu **9** dans un mélange d'absorption liquide **10,** à l'intérieur d'un absorbeur **4,** lequel mélange d'absorption **10** comprend au moins un fluide d'absorption,
- extraire au moins partiellement le mélange d'absorption **10** de l'absorbeur **4,** et pressuriser ledit mélange d'absorption extrait **10,** et
- séparer ledit mélange d'absorption pressurisé **10,** à l'intérieur d'un séparateur **6,** en un effluent de travail **11** et un effluent d'absorption **12,** ledit effluent de travail **11** étant envoyé à l'évaporateur **2,** et ledit effluent d'absorption **12** étant envoyé à l'absorbeur **4,**
**caractérisé en ce que,** pendant ladite séparation, le mélange d'absorption **10** est soumis à une pression égale ou supérieure à la pression de condensation du fluide de travail pur **9,** moyennant quoi pendant ladite séparation, le mélange d'absorption **10** comprend une phase de travail et une phase d'absorption, moyennant quoi lesdites phase de travail et phase d'absorption sont des phases liquides.

2. Procédé selon la revendication 1 précédente, dans lequel ledit mélange d'absorption **10** est séparé en utilisant une séparation centrifuge et/ou gravitaire, ou en utilisant une filtration.

3. Procédé selon l'une quelconque des revendications précédentes, dans lequel ledit fluide d'absorption comprend de l'eau, dans lequel ledit fluide de travail **9** comprend du dioxyde de carbone.

4. Procédé selon l'une quelconque des revendications précédentes, dans lequel ledit fluide d'absorption comprend de l'eau, dans lequel ledit fluide de travail **9** comprend de l'ammoniac.

5. Procédé selon l'une quelconque des revendications précédentes, dans lequel ledit fluide d'absorption est essentiellement de l'eau.

6. Procédé selon l'une quelconque des revendications précédentes, dans lequel le mélange de travail **8** est partiellement transféré de l'évaporateur **2** à l'absorbeur **4** et/ou au séparateur **6.**

7. Procédé selon l'une quelconque des revendications précédentes, dans lequel ledit fluide de travail évaporé **9** est chauffé davantage.

8. Système d'absorption à cycle fermé **1** pour convertir de l'énergie thermique en énergie mécanique, et/ou pour un refroidissement, ledit système **1,** étant configuré pour mettre en oeuvre le procédé selon la revendication 1 et comprenant un évaporateur **2,** un absorbeur **4,** un séparateur **6,** et un dispositif de pressurisation **5,** lequel dispositif de pressurisation **5** est relié fonctionnellement à la fois à l'absorbeur **4** et au séparateur **6,** ledit dispositif de pressurisation **5** étant configuré pour pressuriser un mélange d'absorption **10** comprenant un fluide de travail **9** et un fluide d'absorption, de l'absorbeur **4** dans le séparateur **6,** et jusqu'à une pression égale ou supérieure à la pression de condensation du fluide de travail pur **9.**

9. Système **1** selon la revendication précédente 8, dans lequel ledit séparateur **6** est un séparateur gravitaire et/ou centrifuge.

10. Système **1** selon l'une quelconque des revendications 8 et 9, dans lequel ledit système **1** comprend un échangeur de chaleur **7,** pour chauffer davantage le fluide de travail évaporé **9.**

11. Système **1** selon la revendication précédente 10, dans lequel ledit échangeur de chaleur **7** est incorporé dans une machine de détente **3** du système **1.**

12. Système **1** selon l'une quelconque des revendications 8 à 11, dans lequel ledit évaporateur **2** est incorporé dans une machine de détente **3** du système **1.**
